# EUROPEAN PATENT APPLICATION

(11) **EP 4 790 398 A1**
(43) Date of publication of application: **12.08.2026**
(21) Application number: 25315045.2
(22) Date of filing: 11.02.2025
(51) Int. Cl.: G01N 23/201

(54) **A METHOD FOR PROCESSING SMALL ANGLE SCATTERING DATA FROM A LAMELLAR SYSTEM**

(71) Applicant: Xenocs SAS, 38000 Grenoble (FR)
(72) Inventor: Kikhney, Alexey, 22763 Hamburg (DE)
(74) Representative: Betten & Resch

(57) **Abstract**

A method for processing small angle scattering data from a lamellar system comprises:
- providing a small angle scattering spectrum I(q) of intensities (I) of a scattered radiation as a function of momentum transfer (q) measured over a finite range of momentum transfer (q) between a lower limit (*Qₘᵢₙ*) and an upper limit (*Qₘₐₓ*);
- calculating a function $C * p \left(r\right)$ wherein $p \left(r\right) = \frac{r}{2 {π}^{2}} {\int }_{{Q}_{min}}^{{Q}_{max}} qI \left(q\right) w \left(q\right) sin \left(qr\right) d q$
represents a modified pair distance distribution function of the lamellar system, and C is a constant;
wherein r represents a distance between scattering objects in a pair distance distribution function of the lamellar system

- and determining a number (N) of lamellae and/or a lamellar repeat distance (d) of the lamellar system and/or a lamella half-width (Z_{H}) from formula (1); and/or
- calculating a function $D * p ′ \left(r\right)$ wherein $p ′ \left(r\right) = \frac{r}{2 {π}^{2}} {\int }_{{Q}_{min}}^{{Q}_{max}} {q}^{2} I \left(q\right) w \left(q\right) sin \left(qr\right) d q$ represents a q-weighted modified pair distance distribution function, and D is a constant;
- and determining a lamella half-width (Z_{H}) from formula (3);
wherein w(q) is a window function that adopts a lower value outside of a window range [qₘᵢₙ⁰; qₘₐₓ⁰] and an upper value larger than the lower value inside the window range [qₘᵢₙ⁰; qₘₐₓ⁰].

## Description

The present invention relates to a method for processing small angle scattering data from a lamellar system.

Small angle scattering techniques, such as Small Angle X-ray Scattering (SAXS), provide a unique tool for studying the nanoscopic organization of liposomes and other lamellar structures, as they are able to penetrate the outer surface and offer insight into their important internal structure without the need for special sample (pre)-processing or treatments such as heating, freezing or drying.

Such lamellar structures can be found in many polymeric materials and biological tissues, in particular colloidal systems such as lipidic particles, lipid nanoparticles (LNPs) or liposomes. The lamellar or multilamellar structure is characterized by alternating layers of different compositions, thus alternating electron densities, leading to scattering of X-rays or other types of radiations at small angles. In biological tissues, these alternating layers typically form bilayer membranes, composed of two stacked lipid layers. The width of those bilayer membranes critically influences their permeability to different substances, while also providing stability to the lamellar structure (e.g. lipid vesicles). The present invention therefore relates, among others, to the determination of the lamella width, and in case of multilamellar systems of the number of lamellae and the periodic distance between the lamellae, referred to as the lamellar repeat distance, from scattering data.

Lipid-like drug carriers, such as liposomes, LNPs and extracellular vesicles, are delivery systems designed to encapsulate, transport and release drugs, small molecules, peptides, or genes in a controlled manner. Liposomes are predominantly spherical or multilayered spherical vesicles with one or more bilayers enclosing an aqueous core. The bilayers are typically composed of phospholipids and cholesterol, which self-assemble into stable structures that are generally spherical, with hydrophilic head groups facing outwards and hydrophobic fatty acid "tails" oriented inwards. Liposomes can encapsulate hydrophilic molecules and drugs within the aqueous inner core enclosed by the lipid bilayers, while lipophilic drugs are typically carried within the lipidic multilayer structure. Understanding the inner architecture of liposomes or other lipid-like drug carries, such as the lipid bilayer width, the number of bilayers and the bilayer repeat distance is essential for optimizing their drug encapsulation capacity, stability and release efficiency.

However, interpretation of SAXS and other small angle scattering data from liposomes, lipid nanoparticles and other lamellar systems remains a challenging task due to the limited angular range that can be physically measured and the contribution of experimental noise. The state-of-the-art implementations require interactive fitting of a lamellar profile (approximated by a step function or as a sum of Gaussians) to the input data. These implementations may not fit the input data or not be physically meaningful.

In the case of SAXS, two approaches typically exist in the prior art when performing data modelling of lipid-based lamellar structures. A first approach is a direct modelling approach where empirical or semi-empirical models are used to compute theoretical SAXS data for comparison with the experimentally-collected SAXS data. Indeed, scattering intensity from a system of scattering objects can be described by the product of form factor carrying information about particle shape and contrasts, and structure factor carrying information about possible particles interactions and ordering. Iterative fitting of parameters describing those models is performed and compared to the experimental scattering profile.

If the scattering length density (SLD) profile of the bilayer and the parameters determining layer organization are known - which is rarely the case - it is possible to compute theoretical SAXS data for comparison with the experimentally-collected SAXS data. Existing methods involve adjusting the SLD profile and other parameters through iterative fitting of calculated SAXS data to minimize discrepancies with the experimental data. These procedures require a meticulous manual selection of initial parameters and boundary conditions. Due to the numerous variables involved, these methods may either fail to accurately fit the experimental input data or yield an SLD profile that lacks physical meaningfulness.

Another option in the prior art is to use a model-free approach where fitting is done through calculation of the pair distance distribution function through applying an Indirect Fourier transform to the scattering data. This is a free form without any previous assumptions. An approach to overcome instabilities in the modelling of electron density profiles of bilayers was introduced in the so-called square-root deconvolution method. It enables the retrieval of the electron density profile for a given geometry (planar, cylindrical or spherical) by describing the electron density profile by a set of basis functions (step functions) and using these for modelling the pair distance distribution function. The method was originally applied to scattering data from uncorrelated objects (i.e. without structure factor effects) but later was also adapted for including possible high-order arrangements.

While improving methods exist such as use of Gaussian functions to properly describe the electron density profile of the bilayers and better match real space information, this method still relies on fitting a large number of parameters and makes it difficult to automate the data modelling process. In addition, automatically finding a pair distance distribution function that would fit SAXS data from a liposome or a LNP where negative contrast is present, due to a lower electron density in the fatty acid "tails" than in the solvent, is currently not possible.

It is therefore an object of the invention to propose a model-free method for processing small angle scattering data from a lamellar system which yields better results and is easier to automate.

According to the invention this object is achieved by a method for processing small angle scattering data from a lamellar system, the method comprising:
- providing a small angle scattering spectrum I(q) of intensities (I) of a scattered radiation as a function of momentum transfer (q) measured over a finite range of momentum transfer (q) between a lower limit (*Qₘᵢₙ*) and an upper limit (*Qₘₐₓ*);
- calculating a function $C * p \left(r\right)$ wherein $p \left(r\right) = \frac{r}{2 {π}^{2}} {\int }_{{Q}_{min}}^{{Q}_{max}} qI \left(q\right) w \left(q\right) sin \left(qr\right) d q$
   represents a modified pair distance distribution function of the lamellar system, and C is a constant;
   wherein r represents a distance between scattering objects in a pair distance distribution function of the lamellar system;
- and determining a number (N) of lamellae and/or a lamellar repeat distance (d) of the lamellar system and/or a lamella half-width (Z_{H}) from formula (1); and/or
- calculating a function $D * p ′ \left(r\right)$ wherein $p ′ \left(r\right) = \frac{r}{2 {π}^{2}} {\int }_{{Q}_{min}}^{{Q}_{max}} {q}^{2} I \left(q\right) w \left(q\right) sin \left(qr\right) d q$ represents a q-weighted modified pair distance distribution function, and D is a constant;
- and determining a lamella half-width (Z_{H}) from formula (3);
   wherein w(q) is a window function that adopts a lower value outside of a window range [qₘᵢₙ⁰; qₘₐₓ⁰] and an upper value larger than the lower value inside the window range [qₘᵢₙ⁰; qₘₐₓ⁰];
   and wherein [qₘᵢₙ⁰; qₘₐₓ⁰] defines a range of momentum transfer contained within the measurement limits [Qmin; Qmax].

According to the invention the difficulties of applying a direct Fourier transform to the scattering data I(q) in order to calculate a pair distance distribution function are overcome by applying the direct Fourier transform to the pre-processed scattering data I(q) on a limited q range [Qₘᵢₙ; Qₘₐₓ], which may depend on the instrumental conditions.

In this context, the preliminary step of providing the small angle scattering spectrum I(q) can e.g. be carried out by actually measuring the spectrum, in the case of SAXS using an X-ray apparatus or synchrotron beamline, or by loading a previously measured or simulated spectrum I(q) from a data storage.

To mitigate termination effects in form of artificial oscillations in the pair distance distribution function, which are caused by the absence of scattering data I(q) at low angles below Qₘᵢₙ and at high angles above Qₘₐₓ, the scattering data I(q) is pre-processed through multiplication with a window function w(q). Mathematically, since the scattering data I(q) are multiplied by the window function that adopts a lower value outside of a window range [qₘᵢₙ⁰; qₘₐₓ⁰] and an upper value larger than the lower value inside the window range [qₘᵢₙ⁰; qₘₐₓ⁰], the product also adopts a lower value outside the window range and is smoothly tapered at the edges. Applying the window function before performing the direct Fourier transform therefore reduces any abrupt discontinuities at the edges of the scattering signal, which in turn reduces the termination effects, also known as spectral leakage in signal processing. After the input scattering data I(q) are multiplied by the window function w(q), the direct Fourier transform of formula (2) can be applied to calculate the modified pair distance distribution function p(r) in the range 0 < r < rₘₐₓ, with r representing the distance between scattering objects in the modified pair distance distribution function p(r) of the lamellar system. Here, rₘₐₓ is a maximum distance between scattering objects in the lamellar system that can contribute to the scattering data and therefore depends on qₘᵢₙ⁰. If no information about the lamellar system is available in advance, qₘᵢₙ⁰ should therefore be set as small as reasonably possible. If the general type of lamellar system is known in advance, qₘᵢₙ⁰ should be selected in such a way that rₘₐₓ > dₘₐₓ = d × N + Z_{H}, where d is the expected lamellar repeat distance, N the expected number of lamellae and Z_{H} is the expected lamella half-width.

From the modified pair distance distribution function according to formula (1), the number (N) of lamellae, the lamella half-width Z_{H} and the lamellar repeat distance can be directly determined and output to a user. However, tests and simulations have shown that an even more precise measure of the lamellar half width can be obtained from formula (3) based on the direct Fourier transform of q*I(q) according to formula (4), referred to as the q-weighted modified pair distance distribution function.

The lamella half-width Z_{H} represents the distance between the center of the lamella and the first extremum of the contrast profile ρ(z), which in the context of liposomes corresponds to half the head-to-head distance, measured between the respective head centers.

In all its embodiments the method according to the invention allows to process small angle scattering data from a lamellar system in a fully automated way which makes it applicable to high-throughput analysis of large quantities of measured SAXS and other small angle scattering data.

In a preferred embodiment the number (N) of lamellae can be determined by calculating an area of a first positive peak of the function C*p(*r*) and counting a number (P) of positive peaks having a larger area than the first positive peak, wherein $N = 1 + P$

If only one major positive peak is observed, with all other peaks being less prominent, i.e. P=0, the structure corresponds to a unilamellar system, while more than one pronounced peak would correspond to a multilamellar system.

Advantageously the lamellar repeat distance (d) can be determined by calculating an area of a first positive peak of the function C*p(*r*) and determining d as the r value where a second positive peak having a larger area than the first positive peak begins. In the above-considered case P=0, there is no second positive peak having a larger area than the first positive peak, and therefore no lamellar repeat distance can be defined.

In this embodiment the r value where the second positive peak begins can advantageously be defined as the r value where the function C*p(*r*) exceeds a predetermined distance determination threshold for the second time, ignoring peaks not having a larger area than the first positive peak, or where the function C*p(*r*) exceeds the predetermined distance determination threshold immediately before the maximum of the second positive peak.

In this case the predetermined distance determination threshold can preferably be zero. Accordingly, the lamellar repeat distance d can be found in a particularly simple manner by determining the point where the function C*p(r) crosses zero for the second time.

In all embodiments of the invention the lamella half-width (Z_{H}) can be determined as the r value where the function C*p(*r*) or the function D*p'(*r*) falls below a predetermined half-width determination threshold for the first time.

As validated through experimental and simulated data of various lamellar systems, determining the lamella half-width (Z_{H}) from the function C*p(*r*) has shown to provide slightly less precise values than the alternative determination from the function D*p'(*r*). However, in terms of computing time it may be advantageous to only calculate the function C*p(*r*) based on the modified pair distance distribution function of the lamellar system and to determine all information about the lamellar system from this instead of separately calculating D*p'(*r*) based on the q-weighted modified pair distance distribution function only in view of a more precise determination of Z_{H}.

In this embodiment the predetermined half-width determination threshold can preferably be zero. Accordingly, the lamella half-width (Z_{H}) can be found at the point where the function C*p(r) or the function D*p'(*r*) crosses zero the first time.

In all embodiments of the invention, after the step of providing a small angle scattering spectrum I(q), a step of setting negative intensity values I(q) to zero can advantageously be carried out. This is because experimental SAXS or other small angle scattering data from lipid structures may contain a significant amount of negative intensities that appear after background subtraction when the buffer does not match the sample. The scattering data I(q) is usually background-corrected by collecting the scattering data of the pure solvent and subtracting it from the sample solution scattering data, leaving only the signal from the particles of interest. Setting negative intensities to zero can yield physically more reasonable p(r) functions.

As a general remark in this context, any reference to the scattering data I(q) normally refers to the background-corrected scattering data. Consequently, any calculated pair distance distribution function (formula 2 or 4) from the scattering data I(q) normally represents contrast-weighted pair distances r present in the particle. Here, in the case of SAXS, contrast is the difference of electron density of the particle at a given point and the electron density of the solvent.

In all embodiments of the invention the window function w(q) can be a window function whose lower value equals 0 and whose upper value equals 1 in a central range defined by [qₘᵢₙ¹; qₘₐₓ¹] that is contained in the window range [qₘᵢₙ⁰; qₘₐₓ⁰], and wherein the window function follows a monotonically increasing function in an edge range at lower q values [qₘᵢₙ⁰; qₘᵢₙ¹] and a monotonically decreasing function in an edge range at larger q values [qₘₐₓ¹; qₘₐₓ⁰]. Since the scattering data I(q) is multiplied with the window function in formula (2) and formula (4), the product is then also zero-valued outside the window range [qₘᵢₙ⁰; qₘₐₓ⁰], while the scattering data I(q) inside the central range [qₘᵢₙ¹; qₘₐₓ¹] are equally weighted with the factor 1. In particular, the scattering data I(q) with q < qₘᵢₙ⁰ and q > qₘₐₓ⁰ are cut off and not considered for further analysis, while the scattering data I(q) with qₘᵢₙ¹ < q < qₘₐₓ¹ are equally weighted. Depending on the relationship between qₘᵢₙ⁰/qₘₐₓ⁰ and Qₘᵢₙ/Qₘₐₓ either the entire scattering data I(q), if Qmin = qₘᵢₙ⁰ and Qₘₐₓ = qₘₐₓ⁰, or only an inner part, if Qₘᵢₙ < qₘᵢₙ⁰ and Qₘₐₓ > qₘₐₓ⁰, is used for further analysis. The product of the scattering data I(q) and the window function in the edge range at lower q values [qₘᵢₙ⁰; qₘᵢₙ¹] and in the edge range at larger q values [qₘₐₓ¹; qₘₐₓ⁰] is smoothly tapered by the monotonic function applied.

In this case the window function w(q) can be an asymmetric window function whose edge range at lower q values [qₘᵢₙ⁰; qₘᵢₙ¹] has a different length than its edge range at larger q values [qₘₐₓ¹; qₘₐₓ⁰]. This allows to put different weight on the edge ranges of the measured intensity data. This can be particularly useful if the sample contains lamellar systems that are polydisperse in various aspects. For example, liposomes are often polydisperse in size and shape while having the same well-defined bilayer profile, which is typically the focus of characterization. It is safe to assume that the thickness of the bilayer is much smaller than the overall dimensions of the liposome and that the radius of curvature of the bilayer is much larger than the thickness. A typical bilayer width is around 4 - 7 nm whereas the liposome diameter can be in the range of 100 - 300 nm. The contribution of the longer distances in the lamellar system can be separated and removed from the contribution of the shorter distances in the lamellar system in the "inverse" I(q) space by choosing a suitable edge range at low q-values of the window function. According to the Nyquist theorem of the Fourier transform the minimum distance present in the particle that can be resolved is defined as π/Qₘₐₓ and the maximum distance is defined as π/Qₘᵢₙ. Thus, at lower angles the window function removes the contribution of the larger distances present in the lamellar system, preferably distances describing the overall size.

Advantageously the window function w(q) can be a Tukey window function, wherein the monotonic functions in the edge ranges [qₘᵢₙ⁰; qₘᵢₙ¹] and [qₘₐₓ¹; qₘₐₓ⁰] are cosine functions.

In this preferred embodiment of the invention, a starting point (qₘᵢₙ¹) of the central range ([qₘᵢₙ¹; qₘₐₓ¹]) can be determined based on a maximum distance of interest in the lamellar system and/or the end point (qₘₐₓ¹) of the central range ([qₘᵢₙ¹; qₘₐₓ¹]) can be determined based on a minimum distance of interest in the lamellar system. In a multilamellar vesicle, the maximum distance of interest can be defined as the lamellar repeat distance; in a unilamellar vesicle it can be defined as the lipid bilayer width. The shortest distance of interest in a lamellar system with a lipidic layer, may be the width of the hydrophilic head group.

As a typical example of a lamellar vesicle, the starting point (qₘᵢₙ¹) of the central range ([qₘᵢₙ¹; qₘₐₓ¹]) can be preferably in the range of 0.04 nm⁻¹ - 0.4 nm⁻¹, and/or the end point (qₘₐₓ¹) of the central range ([qₘᵢₙ¹; qₘₐₓ¹]) can be preferably in the range of 3.5 nm⁻¹ - 35 nm⁻¹. In the particular case of a multilamellar vesicle, the lipid bilayer width or the lamellar repeat distance may be defined as the maximum distance of interest and is typically in the range of a few nanometers. For example, if the maximum distance of interest is 8 nm, the minimum momentum transfer can be defined as qₘᵢₙ¹ = π/8 nm⁻¹ ≈ 0.4 nm⁻¹. The minimum distance of interest in a multilamellar vesicle can be defined as the width of the hydrophilic head group, which is approximately 0.9 nm. Then it is reasonable to set qₘₐₓ¹ > π/0.9 nm⁻¹ ≈ 3.5 nm⁻¹.

In all embodiments of the invention the lower limit of the window range (qₘᵢₙ⁰) can be determined based on a beam size of a radiation beam on a small angle scattering detector or based on a beam stop size during the measurement of the small angle scattering spectrum I(q), and/or the upper limit of the window range (qₘₐₓ⁰) can be determined based on a sample-to-detector distance during the measurement of the small angle scattering spectrum I(q).

In all embodiments of the invention, the lower limit of the window range (qₘᵢₙ⁰) can be typically in the range of 0.05 nm⁻¹- 0.2 nm⁻¹ and/or the upper limit of the window range (qₘₐₓ⁰) can be typically in the range of 5 nm⁻¹- 7 nm⁻¹.

The method according to the invention is not limited to the use of X-rays that have been referred to as an example above. Instead the scattered radiation may generally comprise X-rays, visible light, UV radiation, neutrons or electrons. The method according to the invention is also not limited to lipid lamellar systems, but can be applied to any lamellar system with characteristic dimensions and scattering contrast compatible with the radiation properties.

The invention will be described in the following with reference to the attached drawings, in which:
Fig. 1a shows cross-sections of spherical lamellar systems, with the zoomed in part showing the structure of two bilayers of the multi-lamellar system with hydrophilic head groups facing outwards and hydrophobic fatty acid tails oriented inwards;
Fig. 1b shows an exemplary bilayer contrast profile ρ(z) of a multilamellar system with three bilayers;
Fig. 2 shows a schematic perspective view of an exemplary experimental set up for measuring the scattering data of a sample containing lamellar systems;
Fig. 3 shows an asymmetric Tukey window function w(q) in the window range [qₘᵢₙ⁰; qₘₐₓ⁰];
Fig. 4a shows in an upper plot exemplary scattering data I(q) from an unilamellar system, represented by circles, and a window function w(q), represented by a solid line, and in a lower plot the modified pair distance distribution function of formula (2) with the scattering data I(q) from the upper plot;
Fig. 4b shows in an upper plot exemplary scattering data I(q) from a multilamellar system, represented by circles, and the window function w(q), represented by a solid line, and in a lower plot the modified pair distance distribution function of formula (2) with the scattering data I(q) from the upper plot;
Fig. 5 shows the q-weighted modified pair distance distribution function of formula (4) calculated with scattering data I(q) simulated from the bilayer contrast profile ρ(z) shown in fig. 1b;

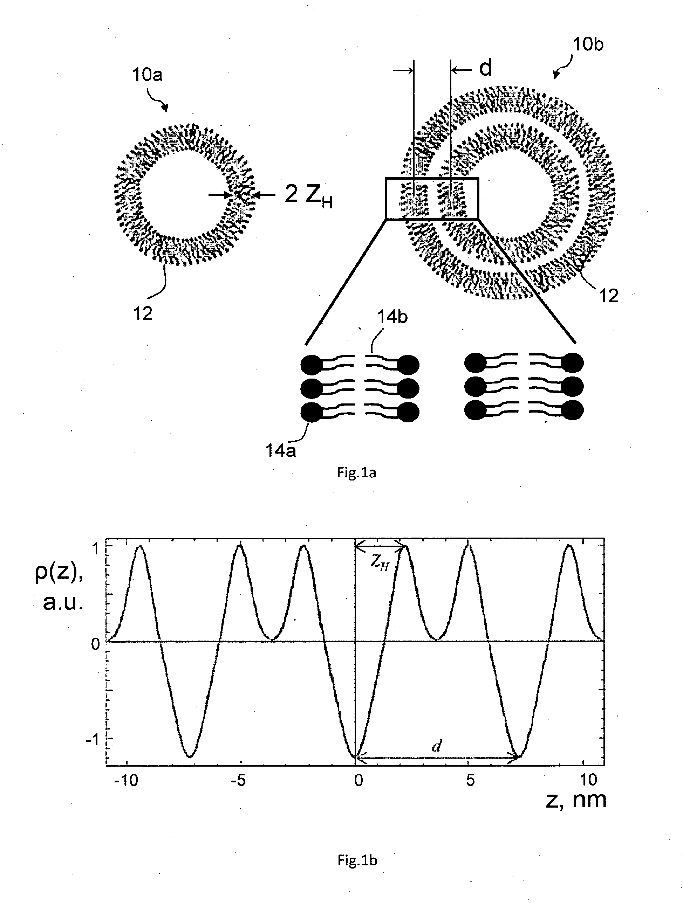

Fig. 1a shows schematic cross-sections of two spherical lamellar systems, which can be liposomes, LNPs, extracellular vesicles or other types of vesicles. The unilamellar vesicle 10a at the left of Fig. 1a consists of one lipid bilayer 12 that encloses an aqueous core. The width of the lipid bilayer 12 is defined as twice the lamella half-width Z_{H} and thus the head-to-head distance. In the case of a multilamellar vesicle 10b having 2 lipid bilayers at the right of Fig. 1a, the periodic distance between the lamellae is defined as the lamellar repeat distance d. Each lipid bilayer 12 is typically composed of amphiphilic phospholipids that are composed of a hydrophilic phosphate head 14a and a hydrophobic tail 14b consisting of two fatty acid chains as shown in the zoomed in part of Fig. 1a. Due to the amphiphilic nature of the phospholipids, each lipid bilayer 12 can assemble into a stable spherical structure 10a or 10b. The structure of biological membranes typically also includes several other types of molecules such as cholesterol for increased stability, in addition to the phospholipids comprising the bilayer.

Other types of structures with repeated scattering contrast variations across the thickness of their scattering volume, such as polymers, films and interfaces, nucleic acids, including but not limited to several forms of RNA, such as mRNA, siRNA, tRNA and microRNA, DNA and non-natural nucleic acids, as well as layered crystalline material and liquid crystal material are also possible lamellar systems whose small angle scattering data can be processed according to the present invention. As potential further examples amphiphilic molecules, phospholipid bilayers, polymer blends, hydrogels, block-copolymers, peptide amphiphiles, clay minerals, metal organics, or multilayered thin films can be mentioned.

In some cases, it might be advantageous to pre-condition the samples in order to get a more homogenous and monodisperse distribution, which can improve the accuracy and resolution of subsequent analyses. Pre-conditioning techniques such as filtration and centrifugation can help to eliminate aggregates of the lamellar systems in the sample, while more complex techniques such as size exclusion chromatography techniques (SEC), force field fractionation or asymmetric flow field-flow fractionation (AFFFF) can help to narrow down the dispersity of the lamellar systems in the sample in terms of size, physical properties and shape.

Fig. 1b shows a corresponding bilayer contrast profile ρ(z) of the electron densities of a multilamellar vesicle having 3 bilayers. In this case, contrast is the difference of the electron density of the vesicle in a given point and the electron density of the solvent. Positive contrast ρ corresponds to the hydrophilic phosphate heads 14a and negative contrast corresponds to the hydrophobic tails 14b consisting of two fatty acid chains. The coordinate z refers to the normal distance in a radial direction from a plane in the center of the middle bilayer among the 3 bilayers of this example. In this case, the lamella half-width Z_{H} is half of the head-to-head distance and d is the lamellar repeat distance. The negative contrast is present, because the electron density of the fatty acid chains is typically lower than the electron density of the solvent.

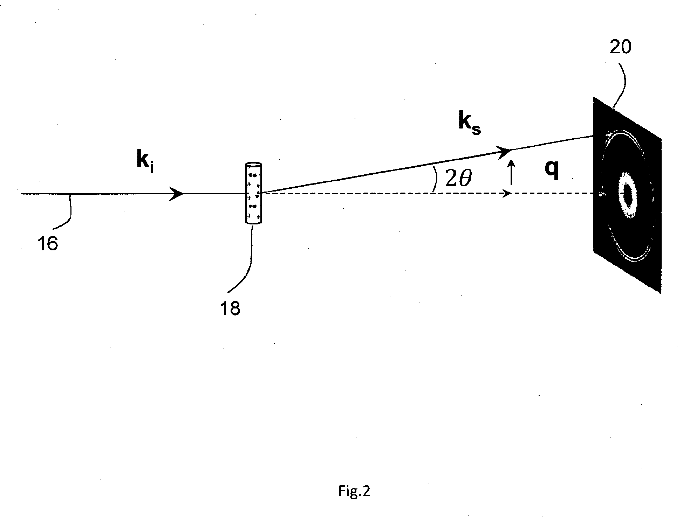

Fig. 2 shows a schematic perspective view of an exemplary small angle scattering experimental set up, where an incoming beam 16 represented by its wave vector kᵢ, inversely proportional to the beam wavelength *λ*, is scattered by a sample 18 and generates a scattered beam of wave vector kₛ. The angle *θ* of the scattered beam is determined from the coordinates of the scattered beam on an X-ray-sensitive detector 20 and represented by the magnitude of the momentum transfer vector *q* = |*kᵢ* - *kₛ*| = $\frac{4 π}{λ} sin θ$.

More precisely, in a preferred embodiment, the scattering data I(q) are collected by illuminating the sample 18, which may be a solution of lamellar systems, for example liposomes, by the collimated monochromatic X-ray beam 16. The wavevector of the incident collimated monochromatic X-ray beam 16 is indicated as kᵢ. Part of the beam passes the sample 18, i.e. it is transmitted, indicated by a dashed line, whereas another part of the incoming beam is scattered by an angle 2θ, defined as the scattering angle, indicated by a solid line. The scattered wavevector is defined as kₛ. The intensity of the scattered X-rays is recorded by a 2D detector 20, which measures a rotationally symmetric signal intensity distribution of scattered signals. All points lying on a circle having its center at the position of the transmitted beam in a corresponding image frame measured by the detector 20 belong to scattering processes with the same scattering angle 2θ and therefore the same momentum transfer, indicated as q. The isotropic scattering pattern can be radially averaged to a one-dimensional data set I(q) where the intensity I is a function of momentum transfer q = |kₛ - kᵢ| = 4π sin(θ)/λ, where λ is the beam wavelength.

The small angle scattering data can be obtained in a variety of scattering geometries to extract more particular information including but not limited to reflectivity, grazing incidence or transmission geometry. The incident beam can be shaped into different geometries depending on the experimental requirements, such as line focus for larger area coverage or point focus for higher spatial resolution. In the case of a line focus geometry, the rotational symmetry of the scattering signal would not be preserved but the method described in the invention remains applicable to the one-dimensional data after desmearing.

The small angle scattering instrumentation can also be selected to facilitate high throughput applications. This is particularly advantageous in various pharmaceutical applications where a plurality of samples is analyzed using automated sample introduction, measurement and interpretation.

The small angle scattering instrumentation can be coupled with various other techniques, including but not limited to spectroscopy techniques such as UV-Vis spectroscopy, Fourier transform infrared (FTIR) spectroscopy, Raman spectroscopy, dynamic or static light scattering.

The measured scattering data I(q) can be obtained from a single scattering experiment or by combining several scattering experiments with different instrumental settings, such as different wavelength of the incident beam, beam size or sample-to-detector distance.

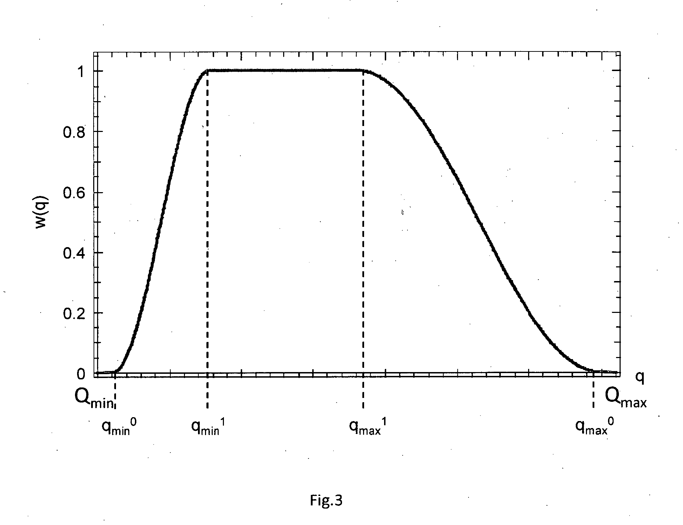

In Fig. 3 a preferred embodiment of the window function w(q) to be used in the processing of the scattering data I(q) is shown. In particular, an asymmetric version of the Tukey window, also known as the cosine-tapered window is plotted. This function is equal to zero outside of the [qₘᵢₙ⁰ - qₘₐₓ⁰] region, equal to unity in the middle range defined by [qₘᵢₙ¹ - qₘₐₓ¹] and follows a cosine on the edges [qₘᵢₙ⁰ - qₘᵢₙ¹] and [qₘₐₓ¹ - qₘₐₓ⁰]. The input scattering data I(q) are multiplied by this window before computing the modified pair distance distribution function p(r) of the lamellar system.

In the case, where qₘᵢₙ¹ = qₘᵢₙ⁰ and qₘₐₓ¹ = qₘₐₓ⁰ the window function becomes a rectangular window, and when qₘᵢₙ¹ = qₘₐₓ¹ = (qₘₐₓ⁰- qₘᵢₙ⁰)/2 the window function becomes a Hann window.

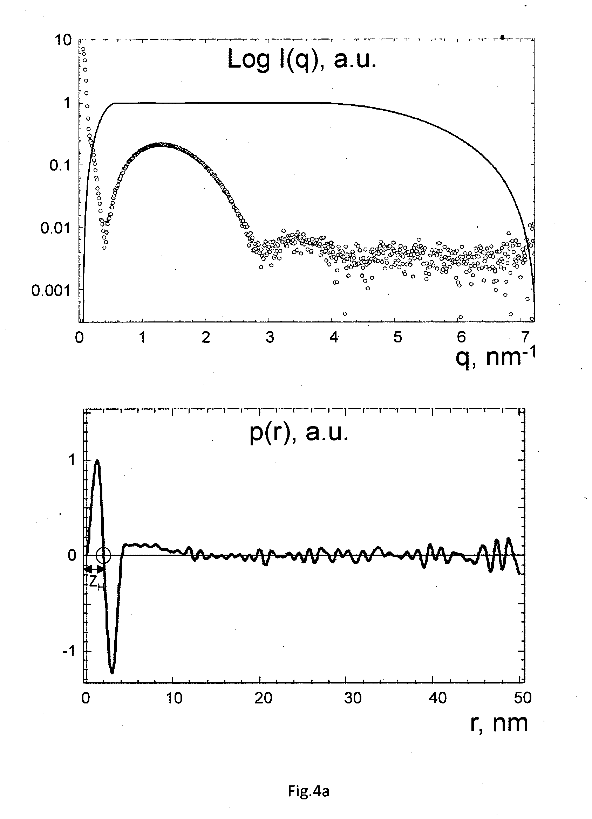

The upper plot of Fig. 4a shows exemplary scattering data I(q), indicated by circles, from a sample containing unilamellar Dimyristoylphosphatidylcholine (DMPC) liposomes, that were measured with an experimental SAXS set-up. The solid line is the window function w(q) that is multiplied with the scattering data I(q) in the next data processing step.

In some cases, it may be advantageous to pre-process and adjust the measured scattering data I(q) for known contributions to the scattering intensity before applying the window function w(q). Such pre-processing steps may involve resampling or smoothing of the scattering data, which can reduce statistical errors and improve the signal-to-noise ratio by aligning data points more uniformly and reducing the impact of random noise on the signal.

Preferably, a normalization of the scattering data is carried out in order to account for experimental variations, such as differences in beam intensity, sample thickness or measurement time. In the preferred case of a SAXS measurement, normalization may be necessary, which involves dividing the measured intensity by the incident beam intensity to account for variations in beam power or by the sample transmission and thickness to ensure consistency across different measurements.

For isolating the scattering signal from the sample and removing any unwanted contributions that can disturb the data analysis, buffer subtraction and background removal are commonly performed. Buffer subtraction is needed to eliminate the contribution from the sample holder and the solvent or buffer, since they contribute to the overall scattering signal. Background removal can correct for unwanted scattering contributions in the experiment that are not related to the sample or buffer. This can include scattering from the sample holder, air or other instrument-related and environmental noise.

Additionally, filtering out negative intensity values, which can be a side-effect of inaccurate data corrections may be advantageous.

In the lower plot of Fig. 4a the resulting calculated modified pair distance distribution function p(r) of the lamellar system is shown. In this case, p(r) is the result of the direct application of formula (2), after the scattering data I(q) obtained from the sample containing unilamellar DMPC liposomes shown in the first plot of Fig. 4a are multiplied by the window function w(q). Only one pronounced positive peak is observed, which corresponds to one lamella or in this case one lipid bilayer being present in the measured lamellar system.

In a preferred embodiment, the zero-crossing point can be assumed to correspond to the lamellar half width Z_{H}, which can be easily determined directly from the plot. Since there is only one bilayer present in the measured sample, no lamellar repeat distance d can be determined.

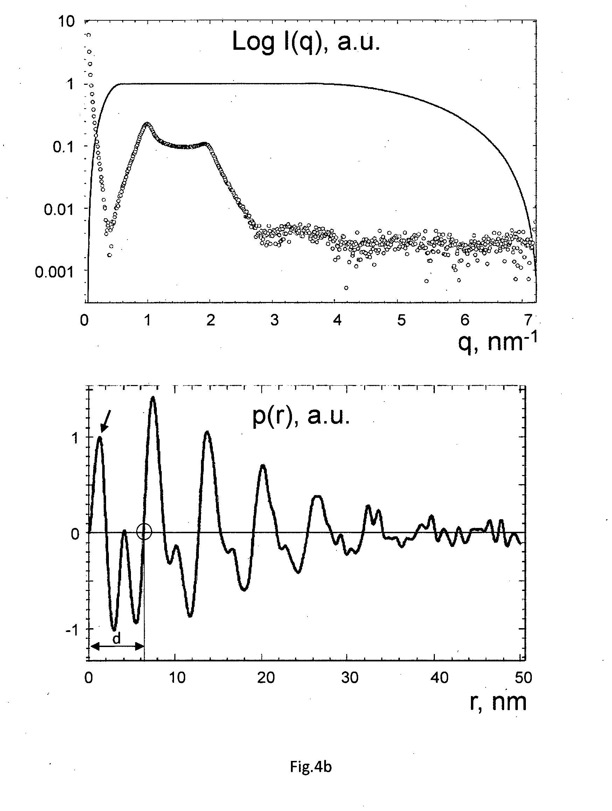

The upper plot of Fig. 4b shows exemplary scattering data I(q), indicated by circles, from a sample containing multilamellar DMPC liposomes, that were measured with an experimental SAXS set-up. The solid line is the window function w(q) that is multiplied with the scattering data I(q) in the following data processing steps. The lower plot of Fig. 4b shows the resulting calculated modified pair distance distribution function p(r) of the lamellar system. In this case, p(r) is the result of the direct application of formula (2), after the scattering data I(q) obtained from the sample containing multilamellar DMPC liposomes shown in the upper plot of Fig. 4b are multiplied by the window function w(q). Multiple positive peaks are observed, which correspond to multiple lamellae or in this case multiple lipid bilayers being present in the measured lamellar system. To determine the number of bilayers, the positive area below the first peak of p(r) ≥ 0, indicated with an arrow, is calculated and the number P of positive peaks with larger or at least comparable or same area are counted. The number of peaks including the first peak, i.e. P + 1, is the lower estimate of the number N of layers in the measured lamellar system.

In a preferred embodiment, the point where the second major peak starts, preferably, when the p(r) crosses zero the second time, is equal to the lamellar repeat distance d.

This point is marked by a circle in Fig. 4b. Positive peaks with an area smaller than the first peak should be ignored.

In this example, the multilamellar DMPC liposomes have at least 5 bilayers and the lamellar repeat distance can be determined from the graph of p(r) as d=6.36 nm.

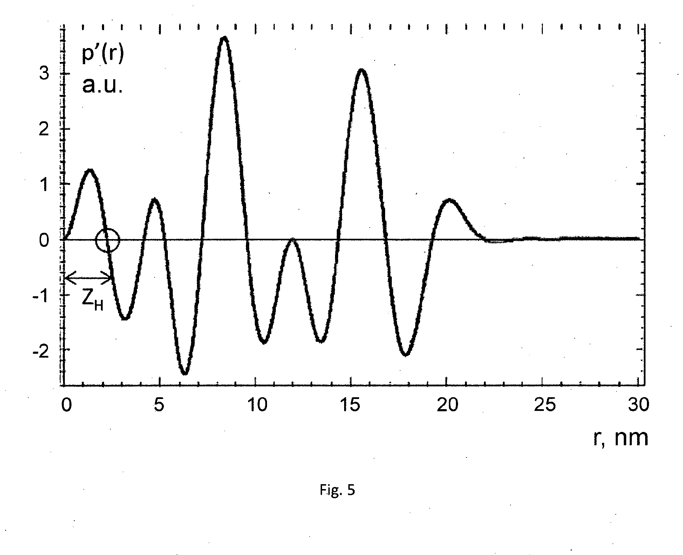

In Fig. 5 the result of the q-weighted modified pair distance distribution function p'(r) with scattering data I(q) simulated from the bilayer contrast profile ρ(z) shown in fig. 1b, is shown. This function gives a more precise measure of the lamellar half width Z_{H}. In a preferred embodiment the lamellar half width Z_{H} can be directly obtained from the zero-crossing point of the function p'(r). The corresponding point is marked by a circle in Fig. 5.

The model-free approach according to the present invention provides accurate information on the geometry of the lamellar system, such as the number of lamellae, lamellar repeat distance and the lamellar half width and is easier to automate than prior art approaches.

As a further application of the method according to the invention, the information obtained, e.g. a number N of lamellae and/or a lamellar repeat distance d of the lamellar system and/or a lamella half-width Z_{H} can be entered into a model-based algorithm that will be fitted to the scattering data, or the information can be used to identify phases and phase transitions within the lamellar system.

In another case, the information provided by the method according to the present invention can be used in a quality control implementation to automatically accept or reject a particular sample batch based on the number N of lamellae and/or a lamellar repeat distance d of the lamellar system and/or a lamella half-width Z_{H}, which could be of advantage in high-throughput applications.

In another case, the output of the method according to the present invention can be used for automatic classification, where a software automatically labels the lamellar system based on the number N of lamellae and/or a lamellar repeat distance d of the lamellar system and/or a lamella half-width Z_{H}, which could be of advantage for automatic screening of samples.

In another case, the information obtained by the method according to the present invention is used as input for a feedback loop, which could be of advantage to act on the processing parameters to ensure that target specifications such as the number N of lamellae and/or a lamellar repeat distance d of the lamellar system and/or a lamella half-width Z_{H} are maintained and prevent any deviation from their nominal values during the production or handling of the lamellar system.

The method according to the invention does not impose any specific computer hardware requirements. It can be used on commercially available small angle scattering instruments, e.g. the applicant's commercially available SAXS instruments or other SAXS setups without hardware adaptation. In particular the invention can be used in a single-purpose highly automated instrument, specifically designed to perform one type of measurements in a highly automated fashion requiring little or even no human intervention. The algorithm of the method according to the invention is then advantageous since it relies on a very small and constrained set of parameters, which after tuning for a particular system can be applied in a fully automatic mode. It makes the invention very suitable for integration into an automatic data processing pipeline or for near real-time feedback on a systems' main parameters.

The method was successfully implemented on a laptop equipped with an Intel i9 CPU (2.4 GHz) and 32 GB of RAM, and it was programmed in Python. The analysis of two SAXS data sets from solutions of DMPC liposomes, obtained from the Small Angle Scattering Biological Data Bank (www.sasbdb.org), was completed in under 30 seconds without parallelization or GPU acceleration. The analyzed data sets, SASBDB IDs: SASDG52 (Fig. 4a, top plot) and SASDG82 (Fig. 4b, top plot), each contain 2627 data points within the scattering vector range of Qₘᵢₙ = 0.04 nm⁻¹ and Qₘₐₓ= 7.29 nm⁻¹. From SASDG52, the values Z_{H}=1.75 nm and N=1 were obtained. From SASDG82, the values Z_{H}=1.75 nm, N=5 and d=6.36 nm were obtained.

## Claims

1. A method for processing small angle scattering data from a lamellar system, the method comprising:
- providing a small angle scattering spectrum I(q) of intensities (I) of a scattered radiation as a function of momentum transfer (q) measured over a finite range of momentum transfer (q) between a lower limit (*Qₘᵢₙ*) and an upper limit (*Qₘₐₓ*);
- calculating a function $C * p \left(r\right)$ wherein $p \left(r\right) = \frac{r}{2 {π}^{2}} {\int }_{{Q}_{min}}^{{Q}_{max}} qI \left(q\right) w \left(q\right) sin \left(qr\right) d q$
represents a modified pair distance distribution function of the lamellar system, and C is a constant;
wherein r represents a distance between scattering objects in a pair distance distribution function of the lamellar system;
- and determining a number (N) of lamellae and/or a lamellar repeat distance (d) of the lamellar system and/or a lamella half-width (Z_{H}) from formula (1); and/or
- calculating a function $D * p ′ \left(r\right)$ wherein $p ′ \left(r\right) = \frac{r}{2 {π}^{2}} {\int }_{{Q}_{min}}^{{Q}_{max}} {q}^{2} I \left(q\right) w \left(q\right) sin \left(qr\right) d q$ represents a q-weighted modified pair distance distribution function, and D is a constant;
- and determining the lamella half-width (Z_{H}) from formula (3);
wherein w(q) is a window function that adopts a lower value outside of a window range [qₘᵢₙ⁰; qₘₐₓ⁰] and an upper value larger than the lower value inside the window range [qₘᵢₙ⁰; qₘₐₓ⁰].

2. The method according to claim 1, wherein the number (N) of lamellae is determined by calculating an area of a first positive peak of the function C*p(*r*) and counting a number (P) of positive peaks having a larger area than the first positive peak, wherein $N = 1 + P$

3. The method according to claim 1 or 2, wherein the lamellar repeat distance (d) is determined by calculating an area of a first positive peak of the function C*p(*r*) and determining d as the r value where a second positive peak having a larger area than the first positive peak begins.

4. The method according to claim 3, wherein the r value where the second positive peak begins is defined as the r value where the function C*p(*r*) exceeds a predetermined distance determination threshold for the second time, ignoring peaks not having a larger area than the first positive peak, or where the function C*p(*r*) exceeds the predetermined distance determination threshold immediately before the maximum of the second positive peak.

5. The method according to claim 4, wherein the predetermined distance determination threshold is zero.

6. The method according to any of the preceding claims, wherein the lamella half-width (Z_{H}) is determined as the r value where the function C*p(*r*) or the function D*p'(*r*) falls below a predetermined half-width determination threshold for the first time.

7. The method according to claim 6, wherein the predetermined half-width determination threshold is zero.

8. The method according to any of the preceding claims, furthermore comprising, after the step of providing a small angle scattering spectrum I(q), a step of setting negative intensity values I(q) to zero.

9. The method according to any of the preceding claims, wherein the window function w(q) is a window function whose lower value equals 0 and whose upper value equals 1 in a central range defined by [qₘᵢₙ¹; qₘₐₓ¹] that is contained in the window range [qₘᵢₙ⁰; qₘₐₓ⁰], and wherein the window function follows a monotonically increasing function in an edge range at lower q values [qₘᵢₙ⁰; qₘᵢₙ¹] and a monotonically decreasing function in an edge range at larger q values [qₘₐₓ¹; qₘₐₓ⁰].

10. The method according to claim 9, wherein the window function w(q) is an asymmetric window function whose edge range at lower q values [qₘᵢₙ⁰; qₘᵢₙ¹] has a different length than its edge range at larger q values [qₘₐₓ¹; qₘₐₓ⁰].

11. The method according to claim 9 or 10, wherein the window function w(q) is a Tukey window function, wherein the monotonic functions in the edge ranges [qₘᵢₙ⁰; qₘᵢₙ¹] and [qₘₐₓ¹; qₘₐₓ⁰] are cosine functions.

12. The method according to any of claims 9 to 11, wherein a starting point (qₘᵢₙ¹) of the central range ([qₘᵢₙ¹; qₘₐₓ¹]) is determined based on a maximum distance of interest in the lamellar system and/or
wherein an end point (qₘₐₓ¹) of the central range ([qₘᵢₙ¹; qₘₐₓ¹]) is determined based on a minimum distance of interest in the lamellar system.

13. The method according to any of any of claims 9 to 12, wherein the starting point (qₘᵢₙ¹) of the central range ([qₘᵢₙ¹; qₘₐₓ¹]) is in the range of 0.04 nm⁻¹ - 0.4 nm⁻¹, and/or
wherein the end point (qₘₐₓ¹) of the central range ([qₘᵢₙ¹; qₘₐₓ¹]) is in the range of 3.5 nm^{-1 -} 35 nm⁻¹.

14. The method according to any of the preceding claims, wherein the lower limit of the window range (qₘᵢₙ⁰) is determined based on a beam size of a radiation beam on a small angle scattering detector or based on a beam stop size during the measurement of the small angle scattering spectrum I(q), and/or
wherein the upper limit of the window range (qₘₐₓ⁰) is determined based on a sample-to-detector distance during the measurement of the small angle scattering spectrum I(q).

15. The method according to any of the preceding claims, wherein the lower limit of the window range (qₘᵢₙ⁰) is in the range of 0.05 nm⁻¹- 0.2 nm⁻¹ and/or
wherein the upper limit of the window range (qₘₐₓ⁰) is in the range of 5 nm⁻¹- 7 nm⁻¹.

16. The method according to any of the preceding claims, wherein the scattered radiation comprises X-rays, neutrons, visible light, UV radiation or electrons.

17. The method according to any of the preceding claims, wherein the number (N) of lamellae and/or the lamellar repeat distance (d) of the lamellar system and/or the lamella half-width (Z_{H}) is entered into a model-based algorithm that is fitted to the scattering data, or as input for an automated classification process, for quality control or in a process feedback loop.
